(19) Europäisches Patentamt
European Patent Office
Office européen des brevets

(11) Publication number: **0 095 078**
**B1**

(12) **EUROPEAN PATENT SPECIFICATION**

(45) Date of publication of patent specification: **02.07.86**

(21) Application number: **83104492.0**

(22) Date of filing: **06.05.83**

(51) Int. Cl.[4]: **C 08 L 23/02,** C 08 K 5/52, C 08 K 5/34, C 08 K 5/13

(54) **Stabilized olefin polymer compositions and their use for preparing shaped articles.**

(30) Priority: **07.05.82 US 375946**
**07.05.82 US 375947**

(43) Date of publication of application:
**30.11.83 Bulletin 83/48**

(45) Publication of the grant of the patent:
**02.07.86 Bulletin 86/27**

(84) Designated Contracting States:
**DE FR GB IT**

(56) References cited:
**FR-A-2 357 571**
**US-A-4 025 486**
**US-A-4 180 498**
**US-A-4 206 111**
**US-A-4 302 383**
**US-A-4 305 866**

(73) Proprietor: **BORG-WARNER CHEMICALS INC.**
**International Center**
**Parkersburg West Virginia 26101 (US)**

(72) Inventor: **Lewis, Elyse Bullock**
**113 Sherwood Drive**
**Williamstown West Virginia 26187 (US)**
Inventor: **Valdiserri, Leo L.**
**Box 485, RR 1**
**Belpre Ohio 45714 (US)**

(74) Representative: **Vossius Vossius Tauchner Heunemann Rauh**
**Siebertstrasse 4 P.O. Box 86 07 67**
**D-8000 München 86 (DE)**

**EP 0 095 078 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates as indicated to stabilized olefin polymer compositions. More particularly it relates to such olefin polymer compositions which are stabilized against deterioration which ordinarily results from prolonged exposure to ultraviolet light. Still more particularly, it relates to the stabilization of olefin polymer compositions as above by means of small proportions of certain additives.

Ultraviolet light has a degradable effect on olefin polymers, the severity of which is dependent on the particular polymer and the geographical location of exposure. The degradation may take the form of discoloration, loss of tensile and impact strength, distortion of initial flexibility, dimensional change, surface craze, cracking, powdering or increased electrical conductivity. All of these effects may result from the breaking of carbon-to-carbon bonds in the polymer chain followed by immediate oxidation of the chain fragments.

It is well known that the addition of certain materials to an olefin polymer will impart a degree of stabilization to that polymer with respect to its resistance to the destructive forces of ultraviolet radiation. These materials, in one instance, function as preferential acceptors of incident ultraviolet radiation because they have a much higher affinity for such radiation than does the olefin polyer. It appears that they absorb harmful radiation and dissipate it as harmless energy. They thus form a protective shield for the polymer in which they are present.

Although there are many types of ultraviolet stabilizers, an important class includes the 2-hydroxyphenylbenzotriazoles. They offer strong intensity and broad ultraviolet stabilization with a fairly sharp wavelength limit close to the visible region. They absorb light at 280—390 mm. which is the spectral region most harmful to polymer chains.

Another important class of ultraviolet stabilizers are the hydroxybenzophenones.

Olefin polymers which are stabilized by an ultraviolet stabilizer frequently contain also an oxidation inhibitor. This is especially so where it is important to achieve light stable polymer compositions. A wide variety of antioxidants are available.

U.S. 4,206,111 (Valdiserri et al.) shows the combination of certain 2-hydroxyphenylbenzotriazoles, dialkylpentaerythritol diphosphites and phenolic ester oxidation inhibitors. The combination is an effective ultraviolet stabilizer in olefin polymers, being effective to extend the useful life of polypropylene, for example.

U.S. 3,988,293 (Mills) deals with a stabilizer system for polyolefins. Polypropylene compositions are shown which contain stabilizing proportions of 2-hydroxy-4-n-octoxybenzophenone and distearyl pentaerythritol diphosphite. Such compositions are shown to be resistant to breakage upon flexing, after prolonged exposure in a Weather-Ometer at 180°.

U.K. 1,526,603 shows a process for preparing bis-(dialkylphenyl)pentaerythritol diphosphites; also shown is the use of such diphosphites in combination with a phenolic inhibitor to impart an enhanced thermal stability to polypropylene.

## SUMMARY OF THE INVENTION

It has been found that the effectiveness of certain known ultraviolet stabilizers, i.e., 2-hydroxybenzotriazoles and hydroxybenzophenones, in olefin polymers is unexpectedly enhanced by the presence of small proportions of a bis-(dialkylphenyl)pentaerythritol diphosphite. The combination of these additives is effective to extend significantly the useful life of olefin polymers, for example, by many hours in a Weather-Ometer.

## DESCRIPTION OF THE PREFERRED EMBODIMENTS

The olefin polymers include homopolymers and copolymers of monoolefins, preferably those monoolefins containing 1—4 carbon atoms. Illustrative examples include polyethylene (including low density, high density, ultra high molecular weight and linear low density polyethylene), polypropylene, EPDM polymers, ethylene-propylene copolymers and polyisobutylene. The stabilization of mixtures of any of these olefin polymers and copolymers likewise is contemplated.

The 2-hydroxyphenylbenzotriazoles contemplated herein are those which conform to the structural formula

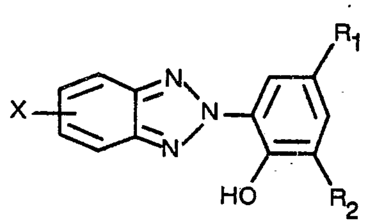

where $R_1$ is lower alkyl or halogen (preferably chlorine), $R_2$ is lower alkyl, halogen (preferably chlorine) or hydrogen, and X is chlorine or hydrogen.

Illustrative examples of such 2-hydroxyphenylbenzotriazoles include 2-(2′-hydroxy-3′,5′-ditertiarybutylphenyl)-5-chlorobenzotriazole (Tinuvin 327), 2-(2′-hydroxy-3′,5′-dimethylphenyl)benzotriazole, 2-(2′-hydroxy-5′-tertiarybutylphenyl)benzotriazole, 2-(2′-hydroxy-3′-tertiarybutyl-5′-methylphenyl)benzotriazole (Tinuvin 326), 2-(2′-hydroxy-5-methylphenyl)benzotriazole (Tinuvin P), 2-(2′-hydroxy-3′,5′-dimethylphenyl)-5-chlorobenzotriazole, 2-(2′-hydroxy-3′,5′-ditertiary-octylphenyl)benzotriazole (Tinuvin 328), 2-(2′-hydroxy-3′,5′-dichlorophenyl)benzotriazole, and 2-(2′-hydroxy-3′-methyl-5′-tertiaryoctylphenyl)benzotriazole. The term "lower alkyl" denotes an alkyl group having 1—10 carbon atoms.

Many of the benzotriazoles of this invention are available under the trademark designation Tinuvin 326, 327 and 328, Tinuvin P, etc. (See above). They may be prepared by coupling an aromatic diazo compound with an aromatic amine, followed by oxidation of the coupled intermediate. An illustrative preparation is as follows:

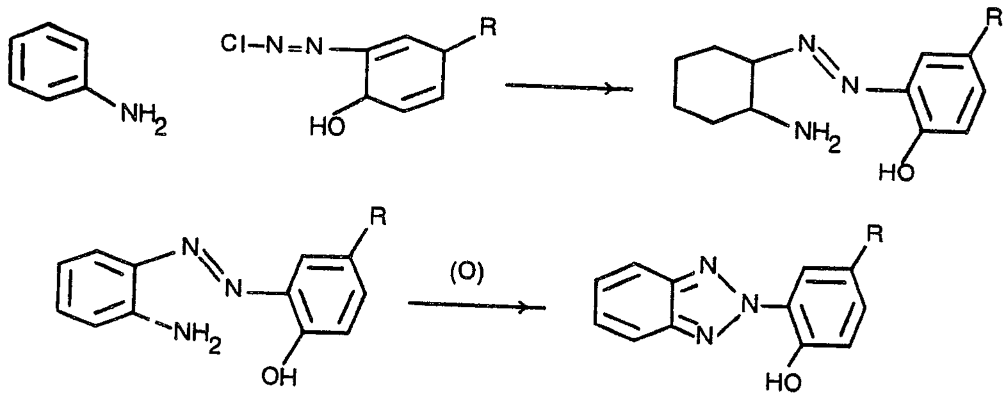


Other methods of preparation are set out in U.S. 3,004,896 (Heller et al.) and U.S. 3,189,615 (Heller et al.).

These benzotriazoles are used, for the purpose of this invention, in concentrations ranging from about 0.01 percent to about 5.0 percent. Best results are obtained at concentrations within the range of from about 0.1 percent to about 0.5 percent, based on the olefin polymer composition.

The hydroxybenzophenones contemplated above are those having the structure

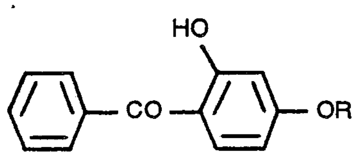

where R is an alkyl group of 1—10 carbon atoms.

The amounts of such hydroxybenzophenones which should be used in the olefin polymer compositions may range from about 0.01% to about 0.5%, based on the weight of the polymer composition. A preferred range, because of optimum effectiveness, is from about 0.08% to about 0.25%.

The hydroxybenzophenone preferably is the one in which R in the above structural formula is n-octyl, i.e., 2-hydroxy-4-n-octoxybenzophenone. This group R, however, may, as indicated, be any alkyl group having 1—10 carbon atoms, and all such hydroxybenzophenones are contemplated herein. Illustrative R groups include methyl, ethyl, n-propyl, 2-methylbutyl, 2-ethylhexyl, decyl and isodecyl groups.

The bis-(dialkylphenyl)pentaerythritol diphosphite component of the combination of the invention may be either the spiro or the caged isomer, i.e.,

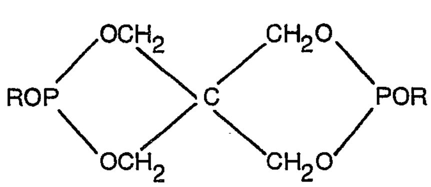

or

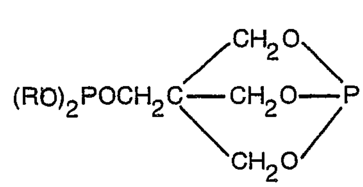

SPIRO

CAGED

or it may be a mixture, in any proportion, of the two. R in the above equation is a dialkylphenyl group of which the alkyl has 3—9 carbon atoms. Such a mixture can be prepared from the reaction of a dialkylphenol as the source of R, with diphenyl pentaerythritol diphosphite, which in turn may be prepared by the reaction of triphenyl phosphite with pentaerythritol. The alkyl groups preferably are bulky, i.e., tertiary or

secondary alkyl groups. Such alkyl groups include isopropyl, sec-butyl, tertiarybutyl, n-amyl, tertiary-amyl, n-hexyl, 2,2-dimethylbutyl, 2-methyl-2-ethylpropyl, phenyl ethyl and tertiaryoctyl.

The two alkyl groups are in the 2,4-positions or 2,6-positions. A particularly preferred species is bis-(2,4-ditertiarybutylphenyl)pentaerythritol diphosphite. Another preferred species is bis-(2,6-ditertiarybutylphenyl)pentaerythritol diphosphite.

The pentaerythritol diphosphite of the present invention may be prepared in accordance with the process described in U.K. Patent No. 1,526,603. That process is a transesterification requiring the reaction, for example, of a dialkylphenol with diphenyl pentaerythritol diphosphite, phenol being split out as a byproduct. The reaction is carried out at elevated temperatures and proceeds best with a basic catalyst.

The hydroxybenzophenones herein may be prepared by the reaction of benzotrichloride with resorcinol in an aqueous acidic environment, to yield the expected 2-hydroxybenzophenone, which then is etherified with an alkyl chloride such as octyl chloride in an alkaline medium to give the 2-hydroxy-4-n-octoxybenzophenone.

The relative proportions of the pentaerythritol diphosphite used herein range from about 0.05 percent to about 1.0 percent, based on the olefin polymer.

These stabilizing ingredients may be added to the olefin polymer in any conventional manner. They may, for example, be blended into the polymer as dry powders, or they may be dissolved in one or more solvents and sprayed onto finely divided polymer particles, or they may be blended as a melt in an extruder, or they may be mixed on a roll mill, or in a Banbury mixer.

Other additives can also be added to the olefin polymer including fillers, pigments, antistatic agents and the like. Metal stearates, for example, are commonly added as lubricants, or as neutralizers, or to impart a measure of heat stability to the polymer composition.

The olefin polymer compositions contemplated herein can be converted by extrusion, injection molding, blow molding and the like into a variety of molded objects, filaments, films, sheets, etc.

The efficiency of these polymer compositions is shown by data obtained from Weather-Ometer testing using a xenon arc as a source of ultraviolet radiation. Opaque test samples (3″ × 2″ × 30 mils) are prepared by compression molding and suspended by clamps in an enclosed atmosphere at 110°F. For 20 minutes of each hour of the test period a thin spray of water is applied to the samples to simulate rainfall.

The test samples are removed from the Weather-Ometer at 100-hour intervals and inspected. The apperance of a crazed surface is taken as a failure of the sample and the number of hours elapsing from the beginning of the test until failure is a measure of the stability of the sample.

The data from such test is shown in Table I. The samples each were 100.75 parts of high density polyethylene (HDPE) containing the additives herein, as shown

TABLE I

| Sample Nos. | 1 | 2 | 3 | 4 | 5 | 6 |
|---|---|---|---|---|---|---|
| A | — | 0.25 | — | — | 0.125 | 0.125 |
| B | — | — | 0.125 | — | 0.125 | — |
| C | — | — | — | 0.125 | — | 0.125 |
| Rating | 600 | 1800 | 900 | 1500 | 1800 | 3300 |

A is 2-Hydroxy-4-n-octoxybenzophenone
B is Distearyl pentaerythritol diphosphite
C is Bis-(2,4-ditertiarybutylphenyl)pentaerythritol diphosphite.

It will be seen that Sample No. 6, representing the invention, clearly is superior in its ultraviolet stability to Sample No. 5 which is the composition shown in U.S. 3,988,293 (Mills). Moreover, an analysis of all the data above shows the unexpected synergism of the combination of additives of the invention.

Additional test data also showing the efficacy of the polymer compositions herein are set out in Table II. The data is collected from tests carried out on 200/16 denier natural polypropylene multifilament. The fiber compositions are prepared by dry blending the various components and then extruding the mixture at 475°F. Fibers are spun at 540°F, drawn at a ratio of 7:1 and given one twist per inch. The test consists of exposure of the test fiber to conditions of ordinary weather in the Caribbean. The tenacity retention of the fibers is monitored and when 50% of the original tenacity is lost the sample is adjudged a failure.

TABLE II

| | A | C | Kilolangleys to Failure |
|---|---|---|---|
| 1. | — | — | 43 |
| 2. | 0.15 | — | 65 |
| 3. | — | 0.15 | 48 |
| 4. | — | 0.30 | 58 |
| 5. | 0.15 | 0.15 | 93 |

It will be noted that Sample No. 5 representing the invention, is more stable than Sample No. 4 which contains twice as much of bis-(2,4-ditertiarybutylphenyl)pentaerythritol diphosphite as does Sample No. 5.

The efficacy of the additive combination of the invention is shown also by the data set out in Table III below. The data is collected from tests carried out as above on 200/16 denier natural polypropylene multifilament. The fiber test samples consist of polypropylene plus the indicated amounts of additives.

TABLE I

Test Samples

| Kilolangley | (1) 0.3A[1] | (2) 0.15A 0.15B | (3) 0.15A 0.15C |
|---|---|---|---|
| 25 | 50% | — | — |
| 28 | — | 50% | — |
| 37 | 36% | 33% | 74% |
| 42 | — | — | 50% |
| 50 | 0 | 0 | 14% |

A[1] is 2-(2'-hydroxy-3',5'-ditertiarybutylphenyl)-5-chlorobenzotriazole
B is distearyl pentaerythritol diphosphite
C is bis-(2,4-ditertiarybutylphenyl)pentaerythritol diphosphate.

It will be seen that Test Sample (3), representative of the present invention, is superior, in its resistance to the deteriorative influence of ultraviolet light, to both (1) and (2). Test Sample (1) contains twice as much of the 2-hydroxybenzotriazole as does Test Sample (3) and yet is less stable than the latter. Moreover, Test Sample (3) is superior in its UV stability to Test Sample (2) which is the combination shown in the above Valdiserri et al. patent.

All parts and percentages herein, unless otherwise expressly stated, are by weight.

**Claims**

1. A polymer composition stabilized against deterioration in the presence of ultraviolet radiation comprising an olefin polymer and stabilizing amounts of (1) a hydroxyphenylbenzotriazole having the structural formula

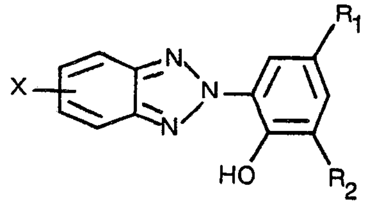

where $R_1$ is lower alkyl or halogen, $R_2$ is lower alkyl, halogen or hydrogen, and X is chlorine or hydrogen or a hydroxybenzophenone having the structure

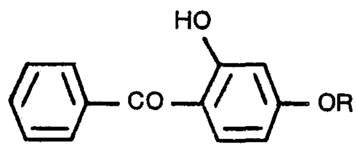

where R is an alkyl group of 1—10 carbon atoms, and (2) a bis-(dialkylphenyl)pentaerythritol diphosphite where the alkyl groups each contain 3—9 carbon atoms.

2. The polymer composition of Claim 1 wherein the olefin polymer is a polymer of propylene.

3. The polymer composition of Claim 1 wherein the olefin polymer is polypropylene.

4. The polymer composition of Claim 1 wherein the alkyl groups in the bis-(dialkylphenyl)pentaerythritol diphosphite are bulky groups.

5. The polymer composition of Claim 4 wherein the alkyl groups are tertiarybutyl groups.

6. The polymer composition of Claim 1 wherein the bis-(dialkylphenyl)pentaerythritol diphosphite is a bis-(2,4-dialkylphenyl)pentaerythritol diphosphite.

7. The polymer composition of Claim 1 wherein component (1) is 2-(2'-hydroxy-3',5'-ditertiarybutylphenyl)-5-chlorobenzotriazole.

8. A polymer composition stabilized against deterioration in the presence of ultraviolet radiation comprising polypropylene and stabilizing amounts of (1) 2-(2'-hydroxy-3',5'-ditertiarybutylphenyl)-5-chlorobenzotriazole and (2) a bis-(ditertiarybutylphenyl)pentaerythritol diphosphite.

9. The polymer composition of Claim 1 wherein component (1) is a hydroxybenzophenone having the structure

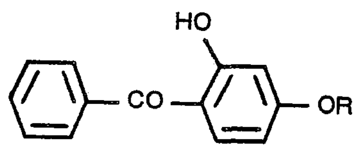

where R is octyl.

10. The use of the polymer compositions according to any of the claims 1 to 9 for preparing shaped articles.

**Patentansprüche**

1. Gegen Zersetzung in Gegenwart von UV-Strahlung stabilisierte Polymerisatmasse, umfassend ein Olefinpolymerisat und stabilisierende Mengen von (1) einem Hydroxyphenylbenzotriazol mit der Strukturformel

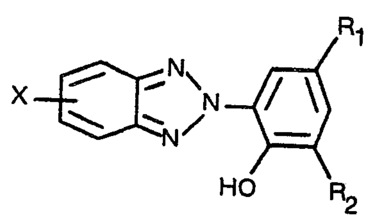

in der $R_1$ einen Niederalkylrest oder ein Halogenatom bedeutet, $R_2$ einen Niederalkylrest, ein Halogen- oder Wasserstoffatom darstellt und X ein Chlor- oder Wasserstoffatom bedeutet, oder ein Hydroxybenzophenon der Struktur

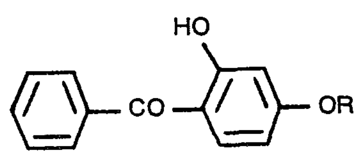

in der R einen Alkylrest mit 1 bis 10 Kohlenstoffatomen bedeutet, und (2) ein bis-(Dialkylphenyl)-pentaerythrit-diphosphit, in dem die Alkylreste jeweils 3 bis 9 Kohlenstoffatome enthalten.

2. Polymerisatmasse nach Anspruch 1, in der das Olefinpolymerisat ein Propylenpolymerisat ist.

3. Polymerisatmasse nach Anspruch 1, in der das Olefinpolymerisat Polypropylen ist.

4. Polymerisatmasse nach Anspruch 1, in der die Alkylreste im bis-(Dialkylphenyl)-pentaerythrit-diphosphit sperrige Reste sind.

5. Polymerisatmasse nach Anspruch 4, wobei die Alkylreste tert.-Butylgruppen sind.

6. Polymerisatmasse nach Anspruch 1, wobei das bis-(Dialkylphenyl)-pentaerythrit-diphosphit ein bis-(2,4-Dialkylphenyl)-pentaerythrit-diphosphit ist.

7. Polymerisatmasse nach Anspruch 1, wobei die Komponente (1) 2-(2'-Hydroxy-3',5'-di-tert.-butylphenyl)-5-chlorbenzotriazol ist.

8. Gegen Zersetzung in Gegenwart von UV-Strahlung stabilisierte Polymerisatmasse, umfassend Polypropylen und stabilisierende Mengen von (1) 2-(2'-Hydroxy-3',5'-di-tert.-butylphenyl)-5-chlorbenzotriazol und (2) bis-(Di-tert.-butylphenyl)-pentaerythrit-diphosphit.

9. Polymerisatmasse nach Anspruch 1, in der die Komponente (1) ein Hydroxybenzophenon der Struktur

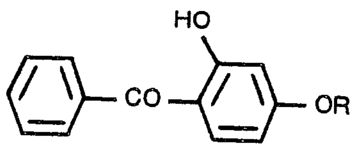

ist, in der R eine Octylgruppe bedeutet.

10. Verwendung der Polymerisatmassen nach einem der Ansprüche 1 bis 9 zur Herstellung von Formkörpern.

**Revendications**

1. Composition de polymère stabilisée contre la dégradation en présence d'une radiation ultraviolette, comprenant un polymère d'oléfine et des quantités stabilisantes (1) d'un hydroxyphénylbenzotriazole répondant à la formule développée:

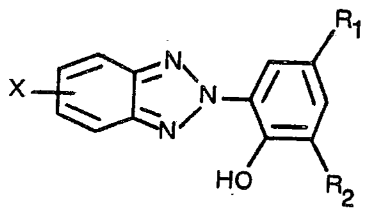

dans laquelle $R_1$ est un groupe alkyle inférieur ou un halogène, $R_2$ est un groupe alkyle inférieur, un halogène ou l'hydrogène, et X est le chlore ou l'hydrogène, ou une hydroxybenzophénone répondant à la formule:

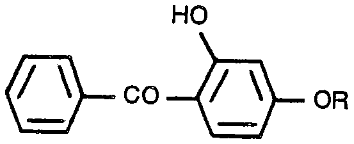

dans laquelle R est un groupe alkyle en $C_1$ à $C_{10}$ et (2) est un diphosphite de bis-(dialkylphényl)pentaérythritol dans lequel les groupes alkyle contiennent chacun 3—9 atomes de carbone.

2. Composition de polymère selon la revendication 1, dans laquelle le polymère d'oléfine est un polymère du propylène.

3. Composition de polymère selon la revendication 1, dans laquelle le polymère d'oléfine est le polypropylène.

4. Composition de polymère selon la revendication 1, dans laquelle les groupes alkyle du diphosphite de bis-(dialkylphényl)pentaérythritol sont des groupes volumineux.

5. Composition de polymère selon la revendication 4, dans laquelle des groupes alkyle sont des groupes tert-butyle.

6. Composition de polymère selon la revendication 1, dans laquelle le diphosphite de bis-(dialkylphényl)pentaérythritol est un diphosphite de bis-(2,4-dialkylphényl)pentaérythritol.

7. Composition de polymère selon la revendication 1, dans laquelle le constituant (1) est le 2-(2'-hydroxy-3',5'-ditert-butylphényl)-5-chlorobenzotriazole.

8. Composition de polymère stabilisée contre la dégradation en présence de radiation ultraviolette, comprenant du polypropylène et des quantités stabilisantes (1) de 2-(2'-hydroxy-3',5'-ditert-butylphényl)-5-chlorobenzotriazole et (2) d'un diphosphite de bis-(ditert-butylphényl)pentaérythritol.

9. Composition de polymère selon la revendication 1 dans laquelle le constituant (1) est une hydroxybenzophénone répondant à la formule:

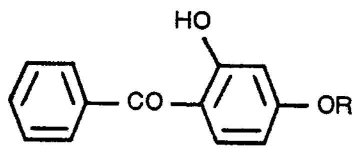

dans laquelle R est un groupe octyle.

10. Utilisation des compositions de polymère selon l'une quelconque des revendications 1 à 9 pour la préparation d'articles façonnés.